# EUROPÄISCHE PATENTSCHRIFT

(11) **EP 1 453 395 B1**
(45) Veröffentlichungstag und Bekanntmachung des Hinweises auf die Patenterteilung: **30.05.2007**
(21) Anmeldenummer: 02779162.3
(22) Anmeldetag: 15.10.2002
(51) Int. Cl.: A44B 18/00

(54) **VERFAHREN ZUR HERSTELLUNG EINES HAFTVERSCHLUSSTEILES**
METHOD FOR PRODUCING AN ADHESIVE CLOSURE ELEMENT
PROCEDE POUR PRODUIRE UN ELEMENT DE FERMETURE ADHESIVE

(30) Priorität: 15.12.2001 DE 10161744
(43) Veröffentlichungstag der Anmeldung: 08.09.2004
(73) Patentinhaber: APLIX MICROSYSTEMS GmbH & Co. KG, 08525 Plauen (DE)
(72) Erfinder: Jahn, Werner, 08547 Jössnitz (DE); Seifert, Guntmar, 08525 Plauen (DE)
(74) Vertreter: Findeisen Hübner Neumann Seerig
(86) Internationale Anmeldenummer: PCT/DE2002/003908
(87) Internationale Veröffentlichungsnummer: WO 2003/051148

(56) Entgegenhaltungen:
- WO-A-01/24654
- WO-A-94/29070
- DE-A- 19 646 318
- DE-C- 19 828 856
- US-A- 6 132 660

## Beschreibung

Die Erfindung betrifft ein Verfahren zur Herstellung eines Haftverschlußteiles gemäß dem Oberbegriff des Anspruchs 1, welches ohne Verwendung von Sieben, aber unter Einsatz einer gummibeschichteten Walze in der Lage ist, eine Vielzahl von Verhakungsmitteln in der Form von ausgebildeten Stiften auf einer Formwalze zu erzeugen, wobei ein thermoplastischer Kunststoff durch einen Extruder über ein Breitschlitzwerkzeug der mit besonderen Merkmalen ausgestatteten Stiftwalze zugeführt wird und nachfolgend je nach Höhe der Produktionsgeschwindigkeit entweder mittels einer temperierten Anpreßwalze, welche bei der Produktion von Breitfolien bereits herkömmlich bekannt ist, in Verbindung mit einer Umlenkwalze durch Andrücken eine Kopfform der Stifte erfährt, oder alternativ berührungsfrei ein Plasmafeld durchläuft, in welchem die Kopfbildung der Stifte erfolgt. Das erfindungsgemäße Verfahren findet Anwendung bei der Herstellung von Haftverschlußteilen, welche vorzugsweise als Befestigungsmittel mit zugehörigem Gegenstück als herkömmlich bekannte Klettverschlüsse in vielfältigem Einsatz sind.

Bisher ist mit der DE 198 28 856 die Lösung eines Herstellungsverfahrens für Haftverschlußteile bekannt, welches dadurch gekennzeichnet ist, indem ein Formwerkzeug Anwendung findet, das an der von einem Druckwerkzeug abgekehrten Seite eines Siebes ein mit dessen Hohlräumen zusammenwirkendes zweites formgebendes Element aufweist, durch das der thermoplastische Werkstoff im Bereich der äußeren Enden der einzelnen Stempel geformt wird. Dabei wird als Druckwerkzeug eine Druckwalze eingesetzt und als Formwerkzeug eine die formgebenden Elemente tragende Formwalze verwendet, wobei beide Walzen für einen zwischen ihnen gebildeten Förderspalt angetrieben werden, durch den der Träger in Transportrichtung bewegt wird. Abgesehen davon, daß die Profilierung von Bandmaterial mit darauf befindlichen Profilen unter Einsatz von Prägewalzen bereits hinlänglich bekannter Stand der Technik sind, liegt das Wesen der Schrift DE 198 28 856 darin, daß ein walzenartig ausgebildetes metallenes Sieb aus zwei übereinander angeordneten Siebschichten mit unterschiedlich großen Öffnungen ausgeführt ist, wobei die innere Schicht größere Öffnungen aufweist als die äußere Schicht, die Öffnungen selbst sich jedoch deckungsgleich übereinander befinden. Durch das durchgehende Hohlräume aufweisende Sieb wird thermoplastischer Kunststoff gedrückt, welcher dort zumindest teilweise aushärtet, jedoch nach weiterer Drehung der Walze während des Produktionsprozesses von dieser noch abgezogen werden kann, wobei der stärkere Kopf der Stengel durch die enger ausgebildete äußere Öffnung der Siebwalze hindurchgezogen wird, ohne daß dabei seine Form beschädigt wird.

Dieser Lösung haftet jedoch der Nachteil an, daß sie wegen der aufwändigen Ausgestaltung des quasi doppelten metallischen Walzensiebes eine äußerst kostenungünstige Konstruktion darstellt und außerdem der Prozeß einer notwendigen Justierung der getrennt ausgeführten Walzensiebe einen kontraproduktiven zusätzlichen Arbeitsgang notwendig macht, da die Öffnungen beider Siebschichten zur Gewährleistung eines störungsfreien Produktionsablaufes genauestens übereinander angeordnet sein müssen. Der Kostenaufwand ist für diese gewählte Ausführung alleine schon wegen der teuren aufwändigen Bearbeitung des Einbringens der Sieböffnungen mittels vorzugsweise Bohren, aber auch Lasern, sehr nachteilig.

Ferner ist mit der DE 196 46 318 die weitere Lösung eines Verfahrens zur Herstellung eines Haftverschlußteiles aus thermoplastischem Kunststoff bekannt, welches dadurch gekennzeichnet ist, indem eine Formwalze ein Sieb bildet, dessen Hohlräume durch Bohren, Ätzen oder mittels eines Lasers hergestellt worden sind und daß die fertigen Verhakungsmittel des Befestigungselementes allein dadurch entstehen, daß der thermoplastische Kunststoff in den offenen Hohlräumen des Siebes der Formwalze zumindest teilweise erhärtet. Die Köpfe des Verhakungsmittels selbst werden bei dem Produktionsprozeß in einem Spalt zwischen dem Sieb der Formwalze sowie dem inneren Walzenkörper ausgebildet. Als Anwendungsmöglichkeit eines in dieser Art hergestellten Haftverschlußteiles wird insbesondere die Bildung eines Haftverschlusses für Babywindeln oder für Krankenhauskleidung offenbart. Für eine Verwendung in Haftverschlüssen derartiger Kleidungsstücke benötigt man eine relativ hohe Anzahl von Verhakungsmitteln, gegenüber alternativen Befestigungsmitteln, auf eine Flächeneinheit bezogen. Das führt bei diesem bereits bekannten Verfahren zu sehr hohen Herstellungskosten für das Formwerkzeug, welches der hohen Anzahl von Verhakungsmitteln entsprechend, ein Sieb mit einer entsprechend großen Anzahl von Hohlräumen pro cm² erforderlich macht. Um zu gewährleisten, daß am äußeren Ende der in den Siebhohlräumen durch den eingedrückten Kunststoff gebildeten Stengel endseitige Verdickungen ausgebildet werden können, ist es bei dem bekannten Verfahren zudem notwendig, daß die Siebhohlräume an ihren Rändern, zumindest auf der vom Druckwerkzeug abgekehrten Seite, nach innen verlaufende Radien aufweisen.

Der vorgenannten Lösung haftet jedoch der Nachteil an, daß die hierfür notwendige Formgebung der sehr großen Anzahl von Hohlräumen des Siebes, was durch Bohren, Ätzen, Galvanisieren oder mittels Laserbearbeitung erfolgen kann, auch zu sehr hohen Herstellungskosten führt, welche sich dann nachfolgend ungünstig auf den Preis des Haftverschlußteiles selbst negativ auswirken.

Schließlich ist mit der DE 694 27 164 noch eine weitere Lösung eines Verfahrens zur Herstellung eines pilzförmigen Hakenbandes für einen mechanischen Verbinder mittels Extruders, verschiedenen beheizten beziehungsweise Druck ausübenden Walzensystemen sowie einer Vakuumeinheit bekannt, wobei das Hakenband als Produkt aus einer einstückigen Anordnung aus hochstehenden Stielen mit Köpfen besteht und dadurch gekennzeichnet ist, daß im Schritt des kontinuierlichen Durchführens des Bandes der Spalt durch den das Band zwischen zwei Walzen geführt wird, von denen eine Walze beheizt ist und eine zweite Gegenwalze einen Druck ausübt, ein Maß zwischen der Stützfläche der Druckwalze und der erwärmten Oberfläche der beheizten Walze aufweist, das kleiner als das vorbestimmte Anfangsdickenmaß des Bandes ist, um so die Vorsprünge gegen die erwärmte Oberfläche zusammenzudrücken, wobei die Geschwindigkeit, das Spaltmaß und die Wärmekapazität der beheizten Walze derart dimensioniert sind, daß eine Wärmeübertragung von der erwärmten Oberfläche in die zusammengedrückten Vorsprünge bewirkt wird, die ausreicht, Außenabschnitte der Vorsprünge zu allgemein kreisförmigen oder scheibenförmigen Hakenköpfen zu verformen.
Dieser Lösung haftet der Nachteil an, daß sie einerseits einen hohen produktionstechnischen Aufwand durch vorrichtungsgemäße teure, kostenaufwändige Anlagen mit massiver und gebohrter Walze sowie auch ein zusätzliches Vakuumsystem erfordert und andererseits ein Endprodukt erzeugt, welches sich nur durch eine relativ geringe Anzahl von kreisförmigen oder hakenförmigen Hakenköpfen auszeichnet, wodurch kein hinreichend guter Gebrauchswert bezüglich des Haftverschlusses erzielt wird.

Die Erfindung stellt sich daher die Aufgabe, ein technologisch effizientes sowie auch kostengünstiges Herstellungsverfahren zu schaffen, bei welchem mit geringem Aufwand die dafür notwendige Verfahrenseinrichtung herstellbar ist und letztlich die Produktion für ein mindestens gleichwertiges Endprodukt einfacher und billiger wie bei den bisher bekannten Verfahren durchgeführt werden kann. Die Aufgabe der Erfindung wird gelöst, durch die im kennzeichnenden Teil des Anspruchs 1 aufgezeigten technischen Merkmale.

Das Wesen der Erfindung besteht in der Anwendung eines Herstellungsverfahrens für ein Haftverschlußteil, welches aus thermoplastischem Kunststoff als Folienband extrudiert wird sowie über eine Breitschlitzdüse dem Spalt zwischen einer temperierten Glätt- und Druckwalze sowie einer temperierten gummibeschichteten Formwalze zugeführt wird. Dabei zeichnet sich diese gummibeschichtete Formwalze zur Durchführung des erfindungsgemäßen Verfahrens durch mehrere besondere konstruktive Merkmale aus. Der Grundkörper der temperierten Formwalze ist metallisch ausgestaltet und auf dieser Walze ist eine Gummischicht formschlüssig aufgebracht. Dabei ist die Gummischicht nach ihrer Aufbringung auf die Formwalze laserbehandelt. Durch den Prozeß des Lasern der Gummischicht werden Sacklöcher für die spätere Aufnahme der Stifte als Verhakungselemente in die Gummischicht durch entsprechende Formgebung äußerst ökonomisch eingebracht. Die Ausgestaltung der Stifte selbst erfolgt vorzugsweise in der Querschnittsform eines Dreieckes. Maßgeblich bei der Ausgestaltung der Gummischicht ist das Merkmal der Anordnung von Sacklöchern zur Aufnahme der Stifte. Auf solche Weise liegt die Gummischicht vollflächig auf dem Grundkörper der metallischen temperierten Formwalze auf, welche zur besseren Aufnahme sowie einem sicheren Sitz der Gummischicht zweckdienlich aufgerauht ist. Durch die Anordnung der Sacklöcher ist die Gummischicht lediglich auf ihrer Oberfläche unterbrochen und bildet auf solche Weise auch kein Sieb zum Gegensatz des bisherigen Standes der Technik. Bei dieser Anwendung ist das Material Gummi sehr effektiv beziehungsweise kostengünstig und extrem leicht zu lasern. Es entstehen an den Rändern der Öffnungen für die Stifte auch keine hinderlichen und sich negativ auswirkenden Aufwölbungen oder Aufwerfungen. Ferner lassen sich pro cm² auch sehr viele Öffnungen äußerst sauber lasern, was zu einem erwünscht hohen Gebrauchswert des Endproduktes beiträgt. Ein weiterer Vorteil der Gummischicht besteht ferner in seiner relativen Elastizität gegenüber jedem vergleichbaren metallischem Material, was einen problemloseren Entformungsvorgang im Produktionsprozeß ermöglicht. Es besteht ferner die Möglichkeit der mehrmaligen Benutzung selbst einer gelaserten Gummischicht, indem diese überdreht und neu gelasert wird. Bereits gelaserte Gummischichten können außerdem problemlos beliebig nachgelasert werden, falls beispielsweise die Forderung nach längeren Stiften erhoben wird, bedingt durch einen anderen Einsatzzweck des Haftverschlusses. Gleichsam ist die Möglichkeit des schnellen Wechselns einer derart kostengünstigen Gummischicht gegeben, falls beispielsweise auch die Form des Querschnitts der Stifte in ihrer Geometrie, deren Länge, oder auch die Anzahl der Stifte, beziehungsweise Befestigungshaken pro Flächeneinheit für unterschiedliche Einsatzzwecke geändert werden sollen. Problemlos können ferner beispielsweise selbst 700 Löcher pro cm² in die Gummischicht eingebracht werden. Somit ist die Lochzahl pro Flächeneinheit in ihrer Anzahl frei wählbar, doch ist ab einer bestimmten Größenordnung kein Sinn mehr für die Wirkungsweise eines guten Haftverschlusses gegeben. Wesentlich bei der erfindungsgemäßen Lösung ist allein der Umstand, daß es verfahrensgemäß keinerlei Einschränkungen durch ökonomische Zwänge mehr gibt.
Die Wahl einer temperierten Formwalze mit Gummibeschichtung wirkt auf dem einschlägigen Fachgebiet revolutionierend, da in keiner Beziehung mehr Grenzen gesetzt sind. Beginnend mit der Beschichtungsstärke des Gummis, bis zur Formgebung des Schaftes der Stifte sowie der Form des Kopfes der Stifte und natürlich der Anzahl pro Flächeneinheit ist eine freie Wählbarkeit ohne Gebundenheit bei der ansonsten aufwendigen Herstellung gegeben. So ist beispielsweise die Beschichtungsstärke der Gummischicht zweckdienlich von etwa 0,5 mm bis 3,0 mm in ihrer Stärke frei wählbar, was die günstigsten Größenordnungen anbelangt. Ferner ist bei der erfindungsgemäßen temperierten gummibeschichteten Formwalze eine optimale, dem Anwendungszweck angepasst sogar ideale Lochgeometrie möglich. Diese besteht in ihrer stufenlos, daß heißt gleichmäßig nach unten verlaufenden, leicht konischen Form des Sackloches für die Stifte. Außer dieser konischen Vorzugsvariante sind jedoch auch exakt zylindrisch verlaufende Sacklöcher anwendbar. Beginnend an der Oberfläche der Gummischicht mit einem leicht vergrößerten Loch, verläuft das gelaserte Loch nach unten sich leicht verjüngend, was im Produktionsprozeß den Entformungsvorgang günstig beeinflußt und hohe Bandgeschwindigkeiten ermöglicht beziehungsweise zuläßt.
Im Gegensatz zur DE 198 28 856 wird bei der vorgeschlagenen erfindungsgemäßen Lösung der Boden des Sackloches nachfolgend derart bearbeitet, indem durch Lasern dreidimensional jede gewünschte willkürliche geometrische Formgebung, bis hin zu einer weiteren Vertiefung des ursprünglich gelaserten Loches produziert werden kann. Auf solche Weise besteht neben den vorgenannten Möglichkeiten der freien dreidimensionalen Ausgestaltung außerdem noch die freie Wählbarkeit des Sacklochbodens für die Ausgestaltung des Stiftkopfes des späteren Verhakungselementes.
Die Gummischicht der temperierten Formwalze wird weiterhin einer gesonderten Oberflächenbehandlung mit einer PTFE-Teflonbeschichtung unterzogen, um das gleichmäßige Einpressen des Kunststoffes und auch das Entformen der Stifte technologisch günstig zu beeinflussen. Bei der erfindungsgemäßen Lösung ist es nicht erforderlich, daß die Sacklöcher für die Stiftherstellung durch eine Vakuumanlage entlüftet werden, weil die gewählte Geometrie sowie die Oberflächenbeschichtung der Gummischicht einschließlich der Sacklöcher mit Teflon, die Erzeugung eines Vakkums besonders für das Einpressen aber auch Entformens der Stifte, nicht erforderlich macht.
Die Stärke der Teflonschicht ist von der Lochtiefe, der Geometrie und der Anzahl der Löcher pro cm² abhängig. Sie bewegt sich etwa in der Größenordnung von vorzugsweise 3 µm bis etwa 5 µm. Mit fortschreitendem Produktionsprozeß wird das Teflon zunehmend in die Wandungen der Löcher gepreßt, wodurch der Effekt einer zunehmenden Verfestigung und Glättung zu verzeichnen ist. Auf solche Weise geht das Beschichtungsmaterial nicht verloren, beziehungsweise es nutzt sich nicht im Sinne eines hohen Verscheißes frühzeitig ab, bezogen auf die Standzeit und Einsatzdauer der Gummischicht der Formwalze. Es tritt ein Triboeffekt im positiven Sinne ein, indem sich das die Wandungen und den Boden der Löcher auskleidende Teflon durch den einpressenden Kunststoff in geringste Poren der Wände weiter eindrückt und derart eine sich zunehmend verfestigende aber zugleich sehr glatte Oberfläche mit geringen Widerstand und hoher Gleitfähigkeit für den eindringenden Kunststoff und seiner späteren Entformung schafft. Mit Verbesserung der Gleitpaarung eng verbunden ist eine hohe Laufgeschwindigkeit der Anlage nebst ausgezeichneter Qualität der Erzeugnisse selbst.
Das Entformen des Bandes mit den Stiften erfolgt durch eine im Produktionszyklus nachfolgend Abzugswalze, welche mit einer Plasmavorrichtung in Verbindung steht. Zwischen der Abzugswalze und der Plasmavorrichtung wird das Stiftband durchgeführt, wobei es berührungslos dem Plasmabogen ausgesetzt ist und die äußeren Enden des Kunststoffes angeschmolzen werden, wodurch die Köpfe der Verhakungselemente gebildet werden. Diese vorrichtungs- und verfahrensgemäße Ausgestaltung der Stiftköpfe mittels Plasmavorrichtung findet Anwendung bei hohen Bandlaufgeschwindigkeiten im Bereich von etwa 12 m/min. bis ca. 200 m/min. Im niedrigeren Geschwindigkeitsbereich von etwa 1 m/min. bis ca.20 m/min. wird die Kopfbildung rein mechanisch und herkömmlich durchgeführt, wobei im Spalt zwischen einer auf > 230° C beheizbaren und teflonbeschichteten Anpreßwalze sowie einer temperierten Abzugswalze das Stiftband durchgeführt wird und dabei die Stiftköpfe angedrückt werden. Abschließend erfolgt lediglich noch der Prozeß der Aufwicklung des fertigen Stiftbandes zum Transport, beziehungsweise seiner Weiterverarbeitung.

Die Erfindung soll nachstehend an einem Ausführungsbeispiel näher erläutert werden. In den dazugehörigen Zeichnungen zeigen :

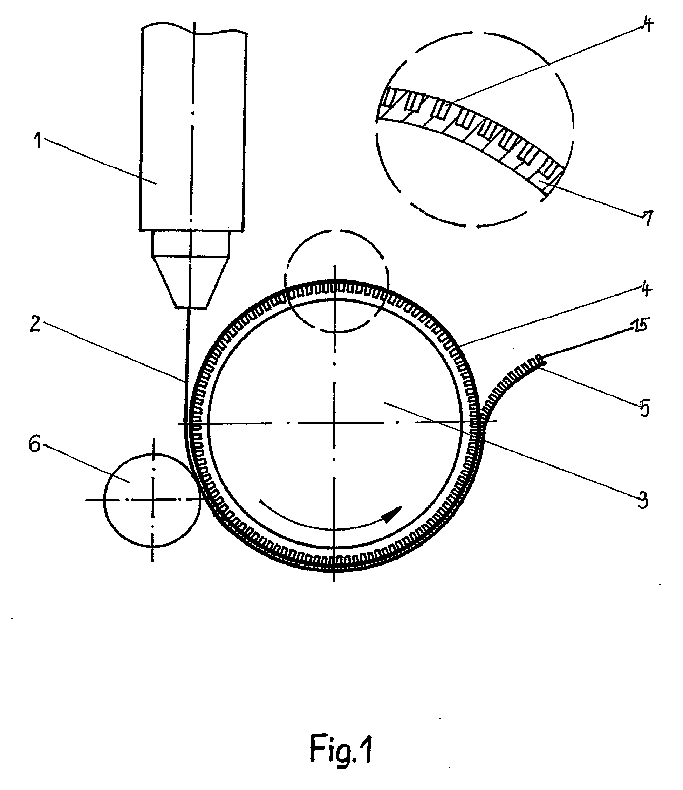

- Figur 1 :: das Produktionsschema des Stiftbandes

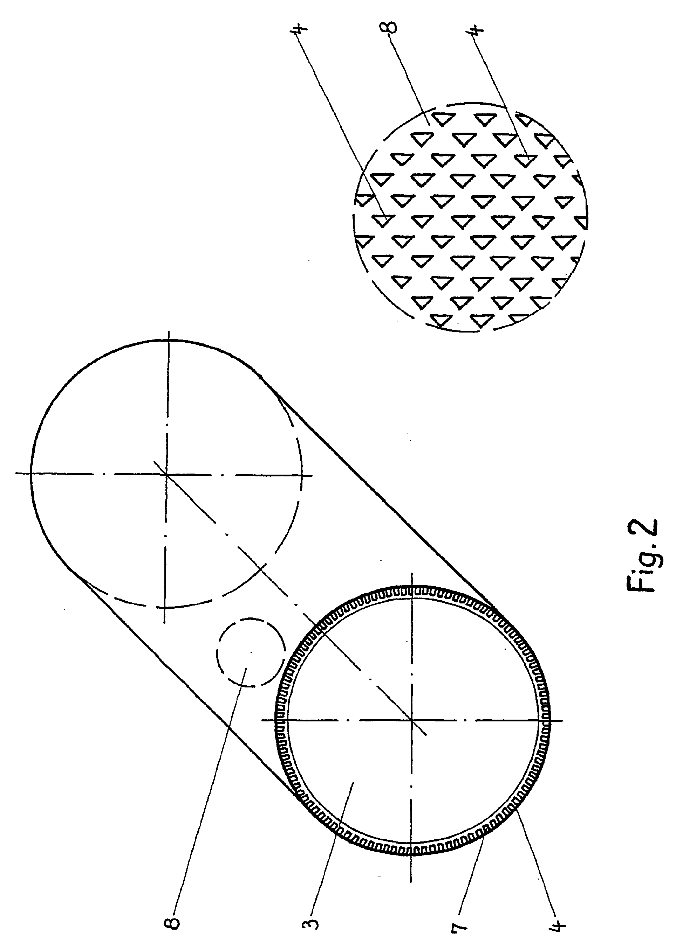

- Figur 2 :: das Schema der Formwalze

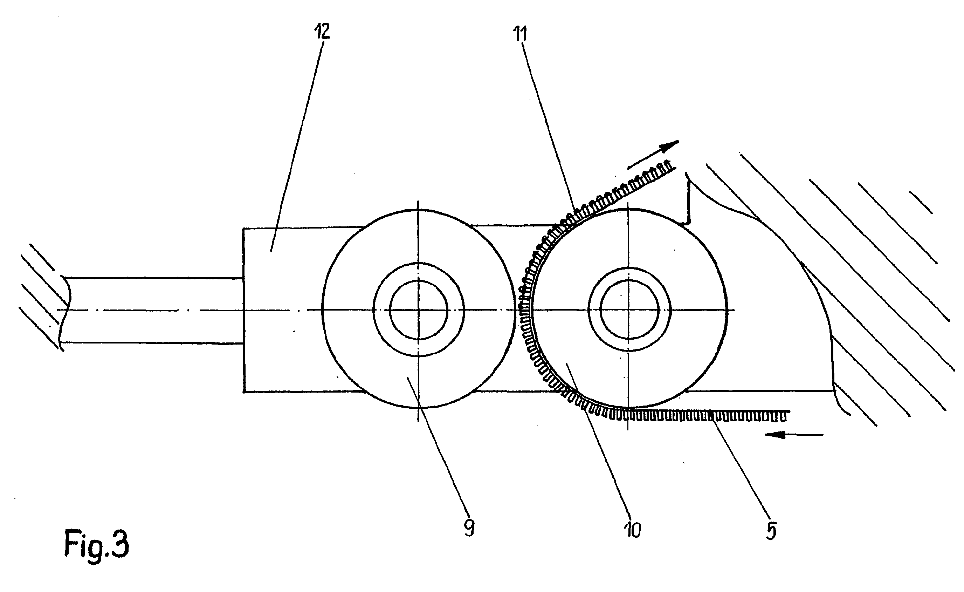

- Figur 3:: das Schema der Kopfbildung mit Walze

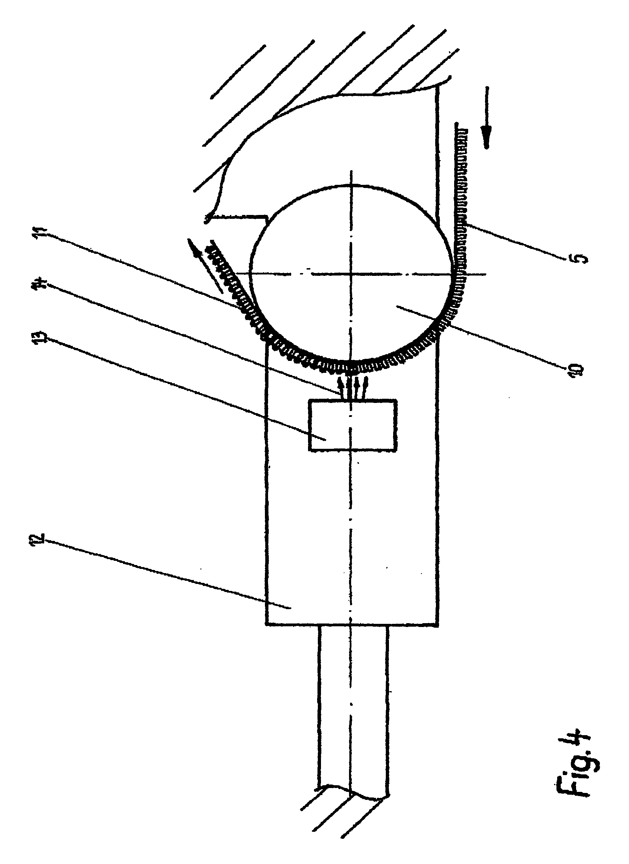

- Figur 4 :: das Schema Plasma - Kopfbildung
- Figur 5 :: die Formgebung Stiftlöcher

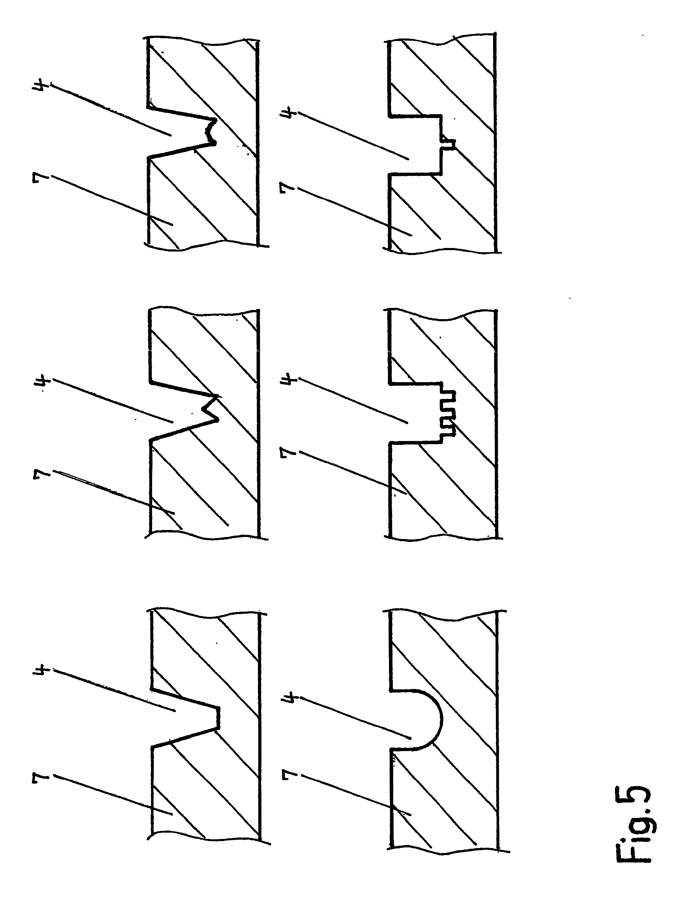

In einem Extruder wird auf herkömmliche Art und Weise Kunststoffgranulat aufgeschmolzen und über eine Breitschlitzdüse 1 als Folienband 2 einer temperierten Formwalze 3 zugeführt. Diese temperierte Formwalze 3 ist auf ihrem äußeren Umfang formschlüssig mit einer Gummischicht 7 ausgestattet. Zweckdienlich zur sicheren Aufnahme der Gummischicht 7 ist dazu die temperierte Formwalze 3 aufgerauht. Die Gummischicht 7 ist als flächenartig ausgebildetes Band mit Stiftlöchern 4 - aus dem Oberflächenausschnitt 8 der Formwalze 3 besonders ersichtlich - versehen, welche jedoch als Sackloch ausgebildet sind und somit nicht durchgängig die Gummischicht 7 durchbrechen. Die Gummischicht 7 besitzt auf ihrem Umfang verteilt gelaserte Öffnungen als den Sti-Möchern 4, welche nach unten, daß heißt dem Boden hin, leicht konisch verlaufen. Gemäß Figur 5 werden vielgestaltige Stirnflächen der Stiftlöcher 4 beispielhaft aufgezeigt, welche auf Grund der unbegrenzten dreidimensionalen Bearbeitungsmöglichkeiten der Gummischicht 7 bezüglich geometrischer Formen nicht nur in der Breite oder Schaftverjüngung, sondern auch ihrer Bodengestaltung so praktiziert werden. Durch die beliebige dreidimensionale Bearbeitungsmöglichkeit des Bodens der Stiftlöcher 4 ergeben sich mit geringem ökonomischem und Bearbeitungsaufwand beispielhaft die dargestellten Formen, welche in ihrer Negativform jeweils die Ausgestaltung des Stiftkopfes 11 ergeben. Die Gummischicht 7 ist zudem oberflächenbehandelt, indem sie mit einer Teflonschicht ausgekleidet ist, welche ebenfalls die Auskleidung der Stiftlöcher 4 mit einbezieht. Durch Ausübung von Druck auf das Folienband 2 mittels einer temperierten Druck- und Glättwalze 6, wird dieses gegen die temperierte Formwalze 3 gepresst, wodurch das Folienband 2 mit seinem Material in die Stiftlöcher 4 gedrückt wird und die Stifte 15 auf dem Stiftband 5 entstehen. Nachfolgend wird das Stiftband 5 durch die temperierte Abzugswalze 10 von der temperierten Formwalze 3 abgezogen und über diese in Förderrichtung weiter transportiert. Gleichzeitig wird durch die auf > 230° C beheizte Anpreßwalze 9 der Stift 15 an seiner Oberfläche kurzzeitig thermisch derart aufgeheizt, daß eine Formung des Stiftkopfes 11 in Verbindung mit dem Anpreßdruck der beheizten Anpreßwalze 9 erfolgt. Die Oberfläche der beheizten Anpreßwalze 9 ist zudem ebenfalls mit einer PTFE-Beschichtung ausgestattet. Technologisch wird mit der Anpreßwalze 9, im Geschwindigkeitsbereich des Stiftbandes 5 von etwa 1 m/min. bis etwa 20 m/min., gearbeitet. Alternativ wird bei bestimmten Kunststoffmaterialien im höheren Geschwindigkeitsbereich des Stiftbandes 5 von etwa 12 m/min. bis ca. 200 m/min. gearbeitet und mit dem von einer Plasmavorrichtung 13 erzeugten Plasmabogen 14 die Stifte 15 an ihrer Oberseite schockartig erhitzt und dadurch angeschmolzen sowie gleichzeitig durch den "Druck" des Plasmabogens 14 derart an ihrer Oberfläche verformt, indem der Stiftkopf 11 ausgebildet wird. Sowohl die beheizte und PTFE-beschichtete Anpreßwalze 9, als auch die temperierte Abzugswalze 10 sind stabil an einem Maschinengestell 12 fixiert und angeordnet.

### Aufstellung der verwendeten Bezugszeichen

- 1 -: Breitschlitzdüse
- 2 -: Folienband
- 3 -: temperierte Formwalze
- 4 -: Stiftloch
- 5 -: Stiftband
- 6 -: temperierte Druck- und Glättwalze
- 7 -: Gummischicht
- 8 -: Ausschnitt Oberfläche Formwalze
- 9 -: beheizte PTFE-beschichtete Anpreßwalze
- 10 -: temperierte Abzugswalze
- 11 -: Stiftkopf
- 12 -: Maschinengestell
- 13 -: Plasmavorrichtung
- 14 -: Plasmabogen
- 15 -: Stift

## Patentansprüche

1. Verfahren zur Herstellung eines Haftverschlußteiles aus thermoplastischem Kunststoff in Form eines extrudierten Stiftbandes (5), auf welchem eine Vielzahl von Verhakungsmitteln in Form von Stiften (15) mit am Ende verstärkt ausgeführten Stiftköpfen (11) angeordnet sind, welches von einer Breitschlitzdüse (1) dem Spalt zwischen einer temperierten Formwalze (3) und einer ebenfalls temperierten Druck- und Glättwalze (6) zugeführt wird, **dadurch gekennzeichnet, daß** eine Formwalze (3) mit metallischem Grundkörper auf ihrer Oberfläche mit einer Gummischicht (7) ausgestattet ist, welche auf ihrem Umfang durch Lasern eingebrachte Stiftlöcher (4) als Sacklöcher aufweist, in welche ein Folienband (2) durch den Druck der temperierten Druck- und Glättwalze (6) eingepreßt wird, wodurch Stifte (15) erzeugt werden und das Stiftband (5) durch eine ebenfalls temperierte Abzugswalze (10) abgezogen sowie durch eine beheizte und teflonbeschichtete Anpreßwalze (9) die Köpfe der Stifte (15) mittels Temperatur und Druck bei niedrigen Bandlaufgeschwindigkeiten des Stiftbandes (5) zu Stiftköpfen (11) geformt werden, jedoch bei hohen Bandlaufgeschwindigkeiten des Stiftbandes (5) mittels einer Plasmavorrichtung (13) und deren Plasmabogen (14) berührungslos die Stiftköpfe (11) erzeugt werden.

2. Verfahren zur Herstellung eines Haftverschlußteiles aus thermoplastischem Kunststoff nach Anspruch 1 **dadurch gekennzeichnet, daß** die Gummischicht (7) auf der temperierten Formwalze (3) zur verfahrensgemäßen Durchführung und guten Entformung mit einer in ihrer Stärke frei wählbaren Teflonbeschichtung von etwa 3 µm bis etwa 5 µm, einschließlich der Innenwandungen der Stiftlöcher (4), ausgestattet ist.

3. Verfahren zur Herstellung eines Haftverschlußteiles aus thermoplastischem Kunststoff nach Anspruch 1 und 2 **dadurch gekennzeichnet, daß** die beheizte und teflonbeschichtete Anpreßwalze (9) zur Durchführung des Verfahrens eine Vorzugstemperatur von > 230° C aufweist.

4. Verfahren zur Herstellung eines Haftverschlußteiles aus thermoplastischem Kunststoff nach den Ansprüchen 1 bis 3 **dadurch gekennzeichnet, daß** die Oberfläche des metallischen Grundkörpers der temperierten Formwalze (3), zur formschlüssigen Aufnahme der Gummischicht (7) mit den Stiftlöchern (4) - welche als Sacklöcher ausgebildet sind -, aufgerauht ist.

5. Verfahren zur Herstellung eines Haftverschlußteiles aus thermoplastischem Kunststoff nach den Ansprüchen 1 und 4 **dadurch gekennzeichnet, daß** verfahrensgemäß die Stiftlöcher (4) auf der Gummischicht (7) in ihrer Geometrie beliebig frei wählbar, daß heißt vielgestaltig ihrem jeweiligem Anwendungszweck nach, ausgeführt sind.

6. Verfahren zur Herstellung eines Haftverschlußteiles aus thermoplastischem Kunststoff nach den Ansprüchen 1, 4 und 5 **dadurch gekennzeichnet, daß** die Anzahl der Stiftlöcher (4) auf der Gummischicht (7) je nach Anwendungszweck beliebig frei wählbar sind.

7. Verfahren zur Herstellung eines Haftverschlußteiles aus thermoplastischem Kunststoff nach den Ansprüchen 1, 2 und 4 bis 6 **dadurch gekennzeichnet, daß** die Gummischicht (7) vollflächig auf der temperierten Formwalze (3) aufliegt.

8. Verfahren zur Herstellung eines Haftverschlußteiles aus thermoplastischem Kunststoff nach den Ansprüchen 1 und 2 sowie 4 bis 7 **dadurch gekennzeichnet, daß** die Stiftlöcher (4) in der Gummischicht (7) geometrisch frei wählbar, jedoch vorzugsweise als leicht konisch verlaufende Sacklöcher in Richtung Boden des Sackloches zur leichteren Entformung der Stifte (15) ausgebildet sind.

9. Verfahren zur Herstellung eines Haftverschlußteiles aus thermoplastischem Kunststoff nach den Ansprüchen 1 und 2 sowie 4 bis 8 **dadurch gekennzeichnet, daß** die Stiftlöcher (4) zur verfahrensgemäßen Durchführung bezüglich der späteren formgerechten Ausgestaltung des Stiftkopfes (11), im Boden des Sackloches beliebig dreidimensional in ihrer Form gelasert werden.

10. Verfahren zur Herstellung eines Haftverschlußteiles aus thermoplastischem Kunststoff nach Anspruch 1 **dadurch gekennzeichnet, daß** die Bandlaufgeschwindigkeit des Stiftbandes (5) im niedrigen Bereich des Durchlaufes zur Formung der Stiftköpfe (11) mittels beheizter und PTFE-beschichteter Anpreßwalze (9) und temperierter Abzugswalze (10) etwa 1 m/min. bis etwa 20 m/min. beträgt.

11. Verfahren zur Herstellung eines Hafttverschlußteiles aus thermoplastischem Kunststoff nach Anspruch 1 und 10 **dadurch gekennzeichnet, daß** die Bandlaufgeschwindigkeit des Stiftbandes (5) im hohen Bereich des Durchlaufes zur Formung der Stiftköpfe (11) durch Anschmelzen der Enden der Stifte (15) berührungslos mittels Plasmavorrichtung (13) im Plasmabogen (14) und der temperierten Abzugswalze (10) mit etwa 12 m/min. bis etwa 200 m/ min. Geschwindigkeit beträgt.

12. Verfahren zur Herstellung eines Haftverschlußteiles aus thermoplastischem Kunststoff nach Anspruch 1, 3 und 11 **dadurch gekennzeichnet, daß** die Anordnung der Walzeneinheit von beheizter und PTFE-beschichteter Anpreßwalze (9) sowie temperierter Abzugswalze (10) zur Durchführung des Verfahrens in einem hinreichend stabilen Maschinengestell (12) fixiert ist.

## Claims

1. A method for producing an adhesive closure element from thermoplastic in the form of an extruded pin strip (5), on which a multiplicity of hooking means in the form of pins (15) with pin heads (11) thickened at the end are arranged and which is fed from a sheet die (1) to the nip between a thermally controlled forming roller (3) and a likewise thermally controlled pressure and smoothing roller (6), **characterized in that** a forming roller (3) with a metallic basic body is equipped on its surface with a rubber layer (7) which on its circumference has pin holes (4), introduced by laser treatment, as blind holes, into which a film strip (2) is pressed by the pressure of the thermally controlled pressure and smoothing roller (6), with the result that pins (15) are produced, and the pin strip (5) is drawn off by a likewise thermally controlled draw-off rollerer (10), and, in the case of low strip running speeds of the pin strip (5), the heads of the pins (15) are formed by temperature and pressure by means of a heated and Teflon-coated pressure roller (9), but, in the case of high strip running speeds of the pin strip (5), the pin heads (11) are produced, without contact, by means of a plasma device (13) and its plasma arc (14).

2. The method for producing an adhesive closure element from thermoplastic as claimed in claim 1, **characterized in that**, for carrying out the method and for good mold removal, the rubber layer (7) on the thermally controlled forming roller (3) is equipped with a Teflon coating, freely selectable in thickness, of about 3 µm to about 5 µm, including the inner walls of the pin holes (4).

3. The method for producing an adhesive closure element from thermoplastic as claimed in claims 1 and 2, **characterized in that**, for carrying out the method, the heated and Teflon-coated pressure roller (9) has a preferred temperature of > 230°C.

4. The method for producing an adhesive closure element from thermoplastic as claimed in claims 1 to 3, **characterized in that** the surface of the metallic basic body of the thermally controlled forming roller (3) is roughened for the form-fitting reception of the rubber layer (7) having the pin holes (4) which are designed as blind holes.

5. The method for producing an adhesive closure element from thermoplastic as claimed in claims 1 and 4, **characterized in that**, in terms of method, the pin holes (4) on the rubber layer (7) are designed to be freely selectable as desired in terms of their geometry, that is to say multiconfigurationally according to their respective intended use.

6. The method for producing an adhesive closure element from thermoplastic as claimed in claims 1, 4 and 5, **characterized in that** the number of pin holes (4) on the rubber layer (7) can be freely selected as desired according to the intended use.

7. The method for producing an adhesive closure element from thermoplastic as claimed in claims 1, 2 and 4 to 6, **characterized in that** the rubber layer (7) lies over the full area on the thermally controlled forming roller (3).

8. The method for producing an adhesive closure element from thermoplastic as claimed in claims 1 and 2 and also 4 to 7, **characterized in that** the pin holes (4) in the rubber layer (7) are freely selectable geometrically, but are preferably designed as blind holes running slightly conically in the direction of the bottom of the blind hole for the easier removal of the pins (15) from the mold.

9. The method for producing an adhesive closure element from thermoplastic as claimed in claims 1 and 2 and also 4 to 8, **characterized in that**, for carrying out the method, with regard to the subsequent dimensionally appropriate configuration of the pin head (11), the pin holes (4) are laser-treated, as desired, three-dimensionally in their form in the bottom of the blind hole.

10. The method for producing an adhesive closure element from thermoplastic as claimed in claim 1, **characterized in that**, in the low range of the run-through for forming the pin heads (11) by means of the heated and PTFE-coated pressure roller (9) and the thermally controlled draw-off rollerer (10), the strip running speed of the pin strip (5) is about 1 m/min to about 20 m/min.

11. The method for producing an adhesive closure element from thermoplastic as claimed in claims 1 and 10, **characterized in that**, in the high range of the run-through for forming the pin heads (11) by the fusion of the ends of the pins (15), without contact, by means of the plasma device (13) in the plasma arc (14) and the thermally controlled draw-off rollerer (10), the strip running speed of the pin strip (5) is about 12 m/min to about 200 m/min.

12. The method for producing an adhesive closure element from thermoplastic as claimed in claims 1, 3 and 11, **characterized in that**, for carrying out the method, the arrangement of the rolling unit of the heated and PTFE-coated pressure roller (9) and of the thermally controlled draw-off rollerer (10) is fixed in a sufficiently stable machine stand (12).

## Revendications

1. Procédé de fabrication d'un élément de fermeture agrippant en matière plastique thermoplastique sous forme d'une bande à pointes extrudée (5), sur laquelle est disposée une multitude de moyens d'accrochage sous forme de pointes (15) comportant des têtes de pointe (11) épaissies à leur extrémité, laquelle bande est acheminée par une buse à fente large (1) vers l'intervalle ménagé entre un rouleau de moulage tempéré (3) et un rouleau de compression et de lissage également tempéré (6), **caractérisé en ce qu'**un rouleau de moulage (3) à corps de base métallique est équipé sur sa surface d'une couche de caoutchouc (7) qui présente sur sa circonférence des trous pour pointes (4) percés au laser sous forme de trous borgnes, dans lesquels est compressée, par pression exercée par le rouleau de compression et de lissage tempéré (6), une bande en feuille (2), ce qui fait apparaître des pointes (15) et que la bande à pointes (5) est extraite par un rouleau d'extraction également tempéré (10) et que les têtes des pointes (15) sont formées en têtes de pointes (11) par un rouleau de pressage chauffé et enrobé de téflon (9) au moyen d'une application de température et de pression à de basses vitesses de circulation de la bande à pointes (5), mais que les têtes de pointes (11) sont fabriquées sans contact à de hautes vitesses de circulation de la bande à pointes (5) au moyen d'un dispositif de plasma (13) et de son arc de plasma (14).

2. Procédé de fabrication d'un élément de fermeture agrippant en matière plastique thermoplastique selon la revendication 1, **caractérisé en ce que** la couche de caoutchouc (7) du rouleau de moulage tempéré (3), pour une réalisation conforme au procédé et un bon démoulage, est équipée d'un enrobage de téflon d'une épaisseur pouvant être choisie librement et allant d'environ 3 µm à environ 5 µm, y compris sur les parois intérieures des trous pour pointes (4).

3. Procédé de fabrication d'un élément de fermeture agrippant en matière plastique thermoplastique selon la revendication 1 et 2, **caractérisé en ce que** le rouleau de pressage chauffé et enrobé de téflon (9) servant à réaliser le procédé présente une température préférentielle > 230°C.

4. Procédé de fabrication d'un élément de fermeture agrippant en matière plastique thermoplastique selon les revendications 1 à 3, **caractérisé en ce que** la surface du corps de base métallique du rouleau de moulage tempéré (3) est rugosifiée pour recevoir en correspondance géométrique la couche de caoutchouc (7) percée de trous pour pointes (4) - qui se présentent sous forme de trous borgnes.

5. Procédé de fabrication d'un élément de fermeture agrippant en matière plastique thermoplastique selon les revendications 1 et 4, **caractérisé en ce que** les trous pour pointes (4) sur la couche de caoutchouc (7) sont réalisés selon le procédé avec une géométrie pouvant être choisie librement, c'est-à-dire sous des formes multiples en fonction de leur but d'utilisation respectif.

6. Procédé de fabrication d'un élément de fermeture agrippant en matière plastique thermoplastique selon les revendications 1, 4 et 5, **caractérisé en ce que** le nombre de trous pour pointes (4) sur la couche de caoutchouc (7) peut être choisi librement en fonction du but d'utilisation.

7. Procédé de fabrication d'un élément de fermeture agrippant en matière plastique thermoplastique selon les revendications 1, 2 et 4 à 6, **caractérisé en ce que** la couche de caoutchouc (7) repose par toute sa surface sur le rouleau de moulage tempéré (3).

8. Procédé de fabrication d'un élément de fermeture agrippant en matière plastique thermoplastique selon les revendications 1 et 2 ainsi que 4 à 7, **caractérisé en ce que** les trous pour pointes (4) dans la couche de caoutchouc (7) peuvent être choisis librement au niveau géométrique, mais sont réalisés de préférence sous forme de trous borgnes s'étendant sous forme légèrement conique en direction du fond du trou borgne pour un démoulage plus facile des pointes (15).

9. Procédé de fabrication d'un élément de fermeture agrippant en matière plastique thermoplastique selon les revendications 1 et 2 ainsi que 4 à 8, **caractérisé en ce que** les trous pour pointes (4), pour une réalisation conforme au procédé au niveau de la configuration ultérieure en bonne et due forme de la tête de pointe (11), sont percés au laser de n'importe quelle manière au niveau de leur forme en trois dimensions au fond du trou borgne.

10. Procédé de fabrication d'un élément de fermeture agrippant en matière plastique thermoplastique selon la revendication 1, **caractérisé en ce que** la vitesse de circulation de bande de la bande à pointes (5), dans la plage basse du passage pour former les têtes de pointes (11) au moyen du rouleau de pressage chauffé et enrobé de PTFE (9) et du rouleau d'extraction tempéré (10), s'élève à environ 1 m/min à environ 20 m/min.

11. Procédé de fabrication d'un élément de fermeture agrippant en matière plastique thermoplastique selon les revendications 1 et 10, **caractérisé en ce que** la vitesse de circulation de bande de la bande à pointes (5), dans la plage haute de passage pour former les têtes de pointes (11) par fusion des extrémités des pointes (15) sans contact au moyen d'un dispositif de plasma (13) dans l'arc de plasma (14) et le rouleau d'extraction tempéré (10) s'élève à environ 12 m/min à environ 200 m/min..

12. Procédé de fabrication d'un élément de fermeture agrippant en matière plastique thermoplastique selon les revendications 1, 3 et 11, **caractérisé en ce que** l'agencement de l'unité à rouleaux composée du rouleau de pressage chauffé et enrobé de PTFE (9) et du rouleau d'extraction tempéré (10) servant à réaliser le procédé est fixé dans un bâti de machine suffisamment stable (12).
